# EUROPÄISCHE PATENTANMELDUNG

(11) **EP 1 930 698 A1**
(43) Veröffentlichungstag der Anmeldung: **11.06.2008**
(21) Anmeldenummer: 07022815.0
(22) Anmeldetag: 24.11.2007
(51) Int. Cl.: G01D 5/04, G01D 5/56

(54) **Vorrichtung zur Erfassung von Betriebsparametern an einer Arbeitsmaschine**

(30) Priorität: 07.12.2006 DE 102006057657
(71) Anmelder: Hirschmann Automation and Control GmbH, 72654 Neckartenzlingen (DE)
(72) Erfinder: Ginter, Martin, 76139 Karlsruhe (DE); Golubovic, Zivorad, 76135 Karlsruhe (DE)
(74) Vertreter: Thul, Hermann

(57) **Zusammenfassung**

Vorrichtung zur Erfassung von Betriebsparametern an einer Arbeitsmaschine mit zumindest einer Erfassungsvorrichtung (2), die einen Betriebsparameter eines Teiles (1) der Arbeitsmaschine erfasst und ein Ausgangssignal (P2) erzeugt, das eine Auswertevorrichtung (6) zuführbar ist, wobei erfindungsgemäß vorgesehen ist, dass zumindest eine weitere Erfassungsvorrichtung (3) vorgesehen ist, die den gleichen Betriebsparameter erfasst wie die erste Erfassungsvorrichtung (2) und ein Ausgangssignal (P3) erzeugt, das ebenfalls der Auswertevorrichtung (6) zuführbar ist, wobei die zumindest zwei Erfassungsvorrichtungen (2, 3) über den Verlauf einer Änderung des Betriebsparameters voneinander unterschiedliche Ausgangssignale (P2, P3) erzeugen.

## Beschreibung

Die Erfindung betrifft eine Vorrichtung zur Erfassung von Betriebsparametern an einer Arbeitsmaschine gemäß den Merkmalen des Oberbegriffes des Patentanspruches 1.

Es ist bekannt, zur Erfassung von Betriebsparametern an einer Arbeitsmaschine eine Erfassungsvorrichtung vorzusehen, die den Betriebsparameter erfaßt und ein Ausgangssignal erzeugt, das einer Auswertevorrichtung zuführbar ist, um in geeigneter Form anzeigt oder einer weiteren Verarbeitung zugeführt werden kann.

Bei Kranen mit einem Ausleger ist es bekannt, eine rotatorisch und mechanisch wirkende Erfassungsvorrichtung, wie ein Potentiometer, so an dem Kran anzuordnen, dass ein Winkel, um den ein Ausleger des Krans verschwenkt wird, zu erfassen. Der erfasste Winkel wird dann einer Lastmomentbegrenzung zugeführt, die aus dem erfassten Winkel ableitet, ob sich der Ausleger des Krans in einem zulässigen Arbeitsbereich befindet oder diesen zulässigen Arbeitsbereich verlassen hat. Dabei ist die genaue Erfassung des Winkels erforderlich, denn wenn der Ausleger den zulässigen Arbeitsbereich verlassen hat, kann eine sicherheitskritische Situation, insbesondere ein Umkippen des Kranes, daraus resultieren.

Bei Arbeitsmaschinen ist es der Regelfall, dass sich die Betriebsparameter schnell ändern können, so dass die Erfassungsvorrichtung dazu ausgebildet sein muss, dieser Änderung schnell zu folgen. Dies hat allerdings zur Folge, dass darunter die Genauigkeit der Erfassungsvorrichtung leidet. Wird die Erfassungsvorrichtung so gestaltet, dass die Auflösung des Ausgangssignales vergrößert wird, ist dadurch die Erfassungsvorrichtung nicht mehr in der Lage, der Änderung des Betriebsparameters ausreichend zu folgen. Außerdem haben Erfassungsvorrichtungen mit einer hohen Auflösung im Regelfall den Nachteil, dass sie kostenintensiv und fehleranfällig sind gegenüber den grob auflösenden und dadurch wesentlich robuster gebauten Erfassungsvorrichtungen mit einer kleineren Auflösung.

Der Erfindung liegt daher die Aufgabe zugrunde, eine Vorrichtung zur Erfassung von Betriebsparametern an einer Arbeitsmaschine bereitzustellen, mit der die eingangs geschilderten Nachteile vermieden werden, bei der insbesondere ein robuster Aufbau mit hoher Auflösung bei der Erfassung und Erzeugung eines von der Erfassung abhängigen Ausgangssignales gegeben ist.

Diese Aufgabe ist durch die Merkmale des Patentanspruchs 1 gelöst.

Erfindungsgemäß ist vorgesehen, dass zumindest eine weitere Erfassungsvorrichtung vorgesehen ist, die den gleichen Betriebsparameter erfasst wie die erste Erfassungsvorrichtung, und ein Ausgangssignal erzeugt, das ebenfalls der Auswertevorrichtung zuführbar ist, wobei die zumindest zwei Erfassungsvorrichtungen über den Verlauf einer Änderung des Betriebsparameters voneinander unterschiedliche Ausgangssignale erzeugen. Die Erfindung stellt damit zwei (oder gegebenenfalls auch mehr als zwei) Erfassungsvorrichtungen zur Verfügung, die so in der Vorrichtung zur Erfassung von Betriebsparametern angeordnet sind, dass entweder die zumindest zwei Erfassungsvorrichtungen gleich ausgebildet sind, ihnen aber auf unterschiedliche Art und Weise der Verlauf der Änderung des Betriebsparameters zugeführt wird, oder so gestaltet sind, dass ihnen der gleiche Verlauf der Änderung des Betriebsparameters zugeführt wird, sie aber unterschiedliche Auflösungen aufweisen.

Aufgrund der zumindest zwei Erfassungsvorrichtungen ermöglicht es die Erfindung, dass mit der einen Erfassungsvorrichtung, im Regelfall diejenige, mit einer gröberen Auflösung, einer schnellen Änderung des Betriebsparameters folgen kann, während es mit der zumindest weiteren Erfassungsvorrichtung, im Regelfall diejenige mit einer feineren Auflösung, es ermöglicht wird, den Betriebsparameter mit einer wesentlich höheren Genauigkeit anzugeben.

In einer besonderen Ausgestaltung der Erfindung ist der Betriebsparameter ein Weg des beweglichen Teiles der Arbeitsmaschine, wobei der Weg sich linear oder rotatorisch ändern kann. Mit der ersten Erfassungsvorrichtung mit der gröberen Auflösung kann also der zurückgelegte Weg (oder die erreichte Position) sehr schnell und zunächst grob erfasst werden, wobei es mit der zumindest weiteren Erfassungsvorrichtung mit der feineren Auflösung ermöglicht wird, den zurückgelegten Weg (oder die Position) aufgrund der höheren Auflösung genauer zu erfassen. Je nach Grad der geforderten Genauigkeit kann auch daran gedacht werden, weitere Erfassungsvorrichtungen, insbesondere eine dritte Erfassungsvorrichtung, mit einer noch höheren Auflösung einzusetzen.

In Weiterbildung der Erfindung ist vorgesehen, dass die Erfassungsvorrichtungen als berührungslos und/oder mechanisch wirkende Erfassungsvorrichtungen ausgebildet sind. Ohne Einschränkung darauf ist die erste Erfassungsvorrichtung mit einer gröberen Auflösung als mechanisch wirkende Erfassungsvorrichtungen ausgebildet, insbesondere als Potentiometer. Diese Potentiometer sind robust, kostengünstig und haben die notwendige grobe Auflösung und können konstruktiv einfach an dem beweglichen Teil der Arbeitsmaschine angeordnet werden. Berührungslos wirkende Erfassungsvorrichtungen, also solche, die induktiv, kapazitiv, optisch oder dergleichen arbeiten, haben den Vorteil einer höheren Auflösung bei gleicher Robustheit und gleicher einfacher konstruktiver Anbringung an den Teil der Arbeitsmaschine oder der Arbeitsmaschine selber.

In Weiterbildung der Erfindung erfolgt die Übertragung der Änderung des Verlaufes des Betriebsparameters, zum Beispiel die Übertragung des zurückgelegten Weges des beweglichen Teiles der Arbeitsmaschine, direkt oder indirekt auf die zumindest eine Erfassungsvorrichtung. Erfolgt die Übertragung direkt, ist beispielsweise die Drehachse der als Potentiometer ausgebildeten Erfassungsvorrichtung direkt mit dem beweglichen Teil der Arbeitsmaschine gekoppelt. Wenn die zweite Erfassungsvorrichtung eine höhere Auflösung aufweisen soll, erfolgt eine indirekte Übertragung der Änderung des Verlaufes des Betriebsparameters auf diese, so dass beide Erfassungsvorrichtungen gleich ausgebildet sind, sie den Verlauf des Betriebsparameters aber voneinander unterschiedlich zugeführt bekommen. Dies kann beispielsweise dadurch erfolgen, dass die Übertragung auf die zweite Erfassungsvorrichtung durch eine mechanisch über- oder untersetzte Verbindung erfolgt. Diese ist beispielsweise als ein Über- oder Untersetzungsgetriebe ausgebildet, das mittels Zahnräder, Zahnriemen, Riementriebe oder dergleichen realisiert ist. Haben alternativ dazu die zumindest beiden Erfassungsvorrichtungen voneinander unterschiedliche Auflösungen, kann beiden der Verlauf des Betriebsparameters direkt zugeführt werden.

In einer weiteren Ausgestaltung der Erfindung sind die zumindest zwei Erfassungsvorrichtungen in einem gemeinsamen Gehäuse oder in voneinander getrennten Gehäusen angeordnet. Hierbei ist daran zu denken, dass die Erfassungsvorrichtungen rauhen und wechselnden Umgebungsbedingungen unterliegen, wie sie beim Einsatz von Arbeitsmaschinen der Regelfall sind. Hier sind inbesondere Feuchtigkeit, Spritzwasser, Regen, Temperaturschwankungen, Staub, Vibrationen und dergleichen zu nennen. Daher ist darauf zu achten, dass die Erfassungsvorrichtungen, egal welcher Bauart, geschützt in einem Gehäuse angeordnet sind, das darüber hinaus konstruktiv einfach an der Arbeitsmaschine oder dessen beweglichen Teil angebracht werden kann. Dies ist auch wichtig im Reparaturfall, damit die Erfassungsvorrichtung schnell und unkompliziert ausgetauscht werden kann. Hierbei bietet es sich an, wenn die Übertragung der Änderung des Verlaufes des Betriebsparameters direkt auf die beiden Erfassungsvorrichtungen erfolgen soll, diese in einem gemeinsamen Gehäuse anzuordnen. Damit vereinfacht sich der gesamte Aufbau und diese Einheit kann problemlos vorgefertigt und geprüft werden. Weichen die zumindest zwei Erfassungsvorrichtungen in ihrer Auflösung voneinander ab, kann einerseits daran gedacht werden, sie ebenfalls in einem gemeinsamen Gehäuse anzuordnen und die über- oder untersetzende Verbindung ebenfalls in dem Gehäuse vorzusehen oder andererseits die zumindest zwei Erfassungsvorrichtungen in voneinander getrennten Gehäusen anzuordnen, wobei dann für die eine Erfassungsvorrichtung die über- oder untersetzende Verbindung in dem Gehäuse der zugehörigen Erfassungsvorrichtung vorgesehen ist.

Ausführungsbeispiele der Erfindung, auf die die Erfindung jedoch nicht beschränkt ist, sind im Folgenden beschrieben und anhand der Figuren erläutert.

Es zeigen:
- Figur 1: ein System einer Vorrichtung zur Erfassung von Betriebsparametern an einer Arbeitsmaschine,
- Figur 2: Ausgangssignale von zwei Erfassungsvorrichtungen,
- Figur 3: eine Arbeitsmaschine mit einem rotatorisch bewegbaren Teil,
- Figur 4: eine Arbeitsmaschine mit einem linear bewegbaren Teil.

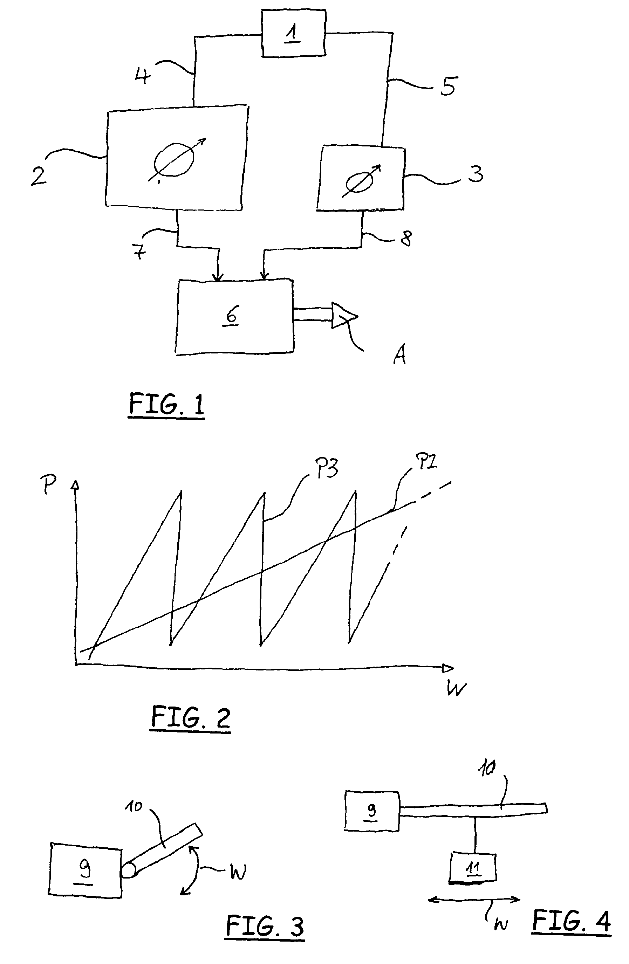

Figur 1 zeigt die beispielhafte Ausführung eines Systems einer Vorrichtung zur Erfassung von Betriebsparametern an einer Arbeitsmaschine. Das bewegbare Teil der Arbeitsmaschine ist schematisch und vereinfachend dargestellt und hat die Bezugsziffer 1. Zur Erfassung des Betriebsparameters des bewegbaren Teiles 1, insbesondere dessen rotatorischen oder linearen Weges, sind zwei Erfassungsvorrichtungen 2, 3 dargestellt, wobei je nach Grad der geforderten Auflösung auch mehr als zwei Erfassungsvorrichtungen, insbesondere noch eine dritte Erfassungsvorrichtung vorhanden sein kann. Die beiden Erfassungsvorrichtungen 2, 3 sind über entsprechende Verbindungen, insbesondere mechanisch arbeitende Verbindungen 4, 5 mit dem bewegbaren Teil 1 verbunden. Haben beide Erfassungsvorrichtungen 2, 3 den gleichen Aufbau und damit die gleiche Auflösung, sind die Verbindungen 4, 5 voneinander unterschiedlich gestaltet, insbesondere handelt es sich um mechanisch über- oder untersetzte Verbindungen, in vorteilhafter Weise eine untersetzte Verbindung zur Erzielung einer höheren (feineren) Auflösung einer der beiden Erfassungsvorrichtungen 2, 3. Somit kann beispielsweise die Erfassungsvorrichtung 2 direkt über die Verbindung 4 mit dem bewegbaren Teil 1 gekoppelt sein, während der Betriebsparameter des bewegbaren Teiles 1 der zweiten Erfassungsvorrichtung 3 mit gleicher Auflösung wie bei der Erfassungsvorrichtung 2 über eine indirekt wirkende Verbindung 5, insbesondere eine Über- oder Untersetzung, zugeführt wird. Ist die Verbindung 4 die direkte Verbindung, so weist die Erfassungsvorrichtung 2 eine gröbere Auflösung auf, wenn die Verbindung 5 als indirekte Verbindung und als untersetzende Verbindung ausgestaltet ist, so dass daraus eine feinere Auflösung der Erfassungvorrichtung 3 resultiert. Aber auch der umgekehrte Fall ist denkbar, wenn nämlich zum Beispiel die Verbindung 4 eine direkte Verbindung ist und damit die Erfassungsvorrichtung 2 die feinere Auflösung aufweist, weil die Verbindung 5 eine indirekte Verbindung ist, die als Übersetzung ausgebildet ist, woraus eine gröbere Auflösung der Erfassungsvorrichtung 3 resultiert.

Ist eine der Verbindungen 4, 5 (oder je nach konstruktiven Gegebenheiten auch beide Verbindungen 4, 5) als indirekte Verbindung ausgestaltet, kommen für über-oder untersetzte Verbindungen 4, 5 Über- oder Untersetzungsgetriebe in Betracht, die beispielsweise mittels Zahnräder, Riemen, Zahnriemen oder dergleichen ausgebildet sind.

Je nach Auflösungsgrad der Erfassungsvorrichtungen 2, 3, der aus unterschiedlich aufgebauten Erfassungsvorrichtungen 2, 3 und/oder direkt oder indirekt wirkenden Verbindungen 4, 5 resultiert, erzeugen die beiden Erfassungsvorrichtungen 2, 3 Ausgangssignale, die über den Verlauf einer Änderung des Betriebsparameters voneinander unterschiedlich sind. Diese Ausgangssignale werden über Verbindungen, insbesondere elektrische Verbindungen 7, 8 (Kabel) oder kabellos (zum Beispiel über eine Funkverbindung) einer Auswertevorrichtung 6 zugeführt. Diese Auswertevorrichtung 6 ist dazu ausgestaltet, die Ausgangssignale der Erfassungsvorrichtung 2, 3 anzuzeigen, zu bewerten, zu verändern oder dergleichen. Im einfachsten Fall wird beispielsweise über einen Ausgang A das jeweilige Ausgangssignal der Erfassungsvorrichtungen 2, 3 angezeigt (zum Beispiel optisch oder, im Falle einer Bereichsüberschreitung, auch akustisch) oder auch einer nachfolgenden Steuereinheit für die Arbeitsmaschine, zum Beispiel einer Lastmomentbegrenzung, zugeführt.

Figur 2 zeigt die Ausgangssignale P2 und P3 der beiden Erfassungsvorrichtungen 2, 3, wobei auf der X-Achse der zurückgelegte Weg W des bewegbaren Teiles 1 und auf der Y-Achse der Pegel des jeweiligen Ausgangssignales P2, P3 dargestellt ist. Hierbei ist erkennbar, dass beide Ausgangssignale P2, P3 beispielsweise einen linearen Verlauf, jedoch mit unterschiedlichen Steigungen, aufweisen. Neben linearen Verläufen sind selbstverständlich auch andere Verläufe denkbar. Während das Ausgangssignal P2 eine grobe Auflösung der Erfassungsvorrichtung 2 darstellt, repräsentiert das Ausgangssignal P3 eine feinere Auflösung der zweiten Erfassungsvorrichtung 3. Durch eine entsprechende Kombinierung der zumindest zwei Ausgangssignale P2, P3 der zumindest zwei Erfassungsvorrichtungen 2, 3, beispielsweise in der Auswertevorrichtung 6 oder einer dieser nachgeschalteten Auswerteeinheit, kann schnell und mit der gewünschten Genauigkeit der zurückgelegte Weg oder die aktuelle Position des bewegbaren Teiles 1 der Arbeitsmaschine erfasst werden.

Die Figuren 3 und 4 zeigen schematisch eine Arbeitsmaschine, die hier als Kran 9 vereinfachend dargestellt ist. Bei Figur 3 wird davon ausgegangen, dass der Kran 9 einen rotatorisch bewegbaren Ausleger 10 aufweist und damit der Weg W der Anstellwinkel des Auslegers 10 ist, der von dem System gemäß Figur 1 erfasst wird.

Bei Figur 4 wird davon ausgegangen, dass der Kran 9 einen entsprechend gestalteten Ausleger 10 aufweist, an dem unterhalb eine linear bewegbare Laufkatze 11 angeordnet ist. In diesem Fall ist das System gemäß Figur 1 zur schnellen und genauen Erfassung des linearen Weges W der Laufkatze 11 ausgebildet.

Während die Darstellungen in Figur 3 und 4 lediglich die Anwendung des erfindungsgemäßen Systems schematisch darstellen sollen, ist die erfindungsgemäße Vorrichtung zur Erfassung von Betriebsparametern bei jeglicher Art von Arbeitsmaschinen anwendbar. Besonders vorteilhaft ist die Anwendung der erfindungsgemäßen Vorrichtung bei solchen Arbeitsmaschinen, bei denen der Betriebsparameter besonders schnell und mit einer erforderlichen Genauigkeit ermittelt werden muß, um daraus Aussagen oder Reaktionen ableiten zu können, ob der Betrieb der Arbeitsmaschine sicher ist oder den sicheren Zustand verlassen hat und in einen unsicheren, insbesondere sicherheitskritischen Zustand übergegangen ist.

### Bezugszeichenliste:

- 1.: bewegbares Teil einer Arbeitsmaschine
- 2.: Erfassungsvorrichtung
- 3.: Erfassungsvorrichtung
- 4.: Verbindung
- 5.: Verbindung
- 6.: Auswertevorrichtung
- 7.: elektrische Verbindung
- 8.: elektrische Verbindung
- 9.: Kran
- 10.: Ausleger
- 11.: Laufkatze

## Patentansprüche

1. Vorrichtung zur Erfassung von Betriebsparametern an einer Arbeitsmaschine mit zumindest einer Erfassungsvorrichtung (2), die einen Betriebsparameter eines Teiles (1) der Arbeitsmaschine erfasst und ein Ausgangssignal (P2) erzeugt, das eine Auswertevorrichtung (6) zuführbar ist, **dadurch gekennzeichnet, dass** zumindest eine weitere Erfassungsvorrichtung (3) vorgesehen ist, die den gleichen Betriebsparameter erfasst wie die erste Erfassungsvorrichtung (2) und ein Ausgangssignal (P3) erzeugt, das ebenfalls der Auswertevorrichtung (6) zuführbar ist, wobei die zumindest zwei Erfassungsvorrichtungen (2, 3) über den Verlauf einer Änderung des Betriebsparameters voneinander unterschiedliche Ausgangssignale (P2, P3) erzeugen.

2. Vorrichtung nach Anspruch 1, **dadurch gekennzeichnet, dass** die Erfassungsvorrichtungen (2, 3) als berührungslos und/oder mechanisch wirkende Erfassungsvorrichtungen ausgebildet sind.

3. Vorrichtung nach Anspruch 1 oder 2, **dadurch gekennzeichnet, dass** die Übertragung der Änderung des Verlaufes des Betriebsparameters direkt oder indirekt auf die zumindest eine Erfassungsvorrichtung (2, 3) erfolgt.

4. Vorrichtung nach Anspruch 3, **dadurch gekennzeichnet, dass** die indirekte Übertragung eine mechanische über- oder untersetzte Verbindung (4, 5) ist.

5. Vorrichtung nach Anspruch 4, **dadurch gekennzeichnet, dass** die mechanisch wirkende Verbindung (4, 5) als ein Über- oder Untersetzungsgetriebe ausgebildet ist.

6. Vorrichtung nach einem der vorhergehenden Ansprüche, **dadurch gekennzeichnet, dass** die zumindest zwei Erfassungsvorrichtungen (2, 3) in einem gemeinsamen Gehäuse oder in voneinander getrennten Gehäusen angeordnet sind.

7. Vorrichtung nach einem der vorhergehenden Ansprüche, **dadurch gekennzeichnet, dass** der Betriebsparameter ein Weg (W) des bewegbaren Teiles (1) der Arbeitsmaschine ist.

8. Vorrichtung nach Anspruch 7, **dadurch gekennzeichnet, dass** die zumindest zwei Erfassungsvorrichtungen (2, 3) zur Erfassung einer rotatorischen oder linearen Änderung des Weges (W) ausgebildet sind.

9. Vorrichtung nach einem der vorhergehenden Ansprüche, **dadurch gekennzeichnet, dass** die Ausgangssignale (P2, P3) lineare Signale mit voneinander unterschiedlichen Steigungen sind.
